# EUROPEAN PATENT APPLICATION

(11) **EP 4 715 364 A1**
(43) Date of publication of application: **25.03.2026**
(21) Application number: 24901079.4
(22) Date of filing: 05.12.2024
(51) Int. Cl.: G01N 3/08, G01N 3/04, H01M 10/42

(54) **APPARATUS FOR INSPECTING ELECTRODE-TAB ASSEMBLY AND INSPECTION METHOD USING SAME**

(30) Priority: 07.12.2023 KR 20230176700
(71) Applicant: LG Energy Solution, Ltd., Seoul 07335 (KR)
(72) Inventor: LIM, Sung Sang, Daejeon 34122 (KR); KIM, Sung Ryul, Daejeon 34122 (KR); KANG, Tae Hoon, Daejeon 34122 (KR); MOON, Jon Ho, Daejeon 34122 (KR)
(74) Representative: Goddar, Heinz J.
(86) International application number: PCT/KR2024/019784
(87) International publication number: WO 2025/121893

(57) **Abstract**

Embodiments provide an electrode-tab assembly inspection device. The electrode-tab assembly inspection device includes: a first jig configured to fix an electrode including a coated part and an uncoated part; a second jig configured to pull an electrode tab, which is welded to the uncoated part of the electrode, in a direction that is not parallel to the electrode; and a gauge configured to sense a tensile force applied to the electrode tab.

## Description

### [Technical Field]

The present invention relates to an electrode-tab assembly inspection device and an inspection method using the same. More specifically, the present invention relates to an inspection device configured to measure welding strength between an electrode tab and an electrode, and an inspection method using the same. The present application claims the benefit of priority based on Korean Patent Application No. 10-2023-0176700, filed on December 7, 2023, and the entire contents of the Korean patent application is incorporated herein by reference.

### [Background Art]

Secondary batteries can be charged and discharged a plurality of times unlike primary batteries. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

The manufacture of a secondary battery includes an electrode process including mixing, coating, roll pressing, slitting, and notching processes, an assembly process of embedding an electrode assembly into a case, and an activation process of electrically activating and stabilizing battery cells. After the activation process, the battery cells may be stacked to form a cell stack. The cell stack may be mounted in a housing together with a module frame or be mounted directly in the housing without the module frame.

### [Disclosure]

### [Technical Problem]

The present invention is directed to providing an electrode-tab assembly inspection device with improved reliability, and an inspection method using the same.

### [Technical Solution]

Embodiments of the present invention provide an electrode-tab assembly inspection device. The electrode-tab assembly inspection device includes: a first jig configured to fix an electrode including a coated part and an uncoated part; a second jig configured to pull an electrode tab, which is welded to the uncoated part of the electrode, in a direction that is not parallel to the electrode; and a gauge configured to sense a tensile force applied to the electrode tab.

The second jig may be configured to pull the electrode tab in a direction oblique to the electrode.

The second jig may be configured to pull the electrode tab in a direction perpendicular to the electrode.

The first jig may be configured to move the electrode to cause an angle between the electrode tab and the electrode to be maintained constant.

The first jig may be a rail jig.

The electrode-tab assembly inspection device may further include a connection device configured to connect the first jig and the second jig.

A displacement of the first jig may be the same as a displacement of the second jig.

Embodiments provide an inspection device. The inspection method includes: applying a tensile force to an electrode-tab assembly, which includes an electrode and an electrode tab, in a direction that is not parallel to the electrode, the electrode-tab assembly further including a plurality of welded parts between the electrode and the electrode tab; and determining breaking energy of the plurality of welded parts between the electrode and the electrode tab of the electrode-tab assembly.

The tensile force may be perpendicular to the electrode.

The tensile force may be oblique to the electrode.

The direction of the tensile force may be constant while the plurality of welded parts are broken.

In the applying of the tensile force to the electrode-tab assembly in the direction not parallel to the electrode, the electrode may be moved in a direction parallel to the electrode.

The breaking energy of the plurality of welded parts may be calculated based on an integration of the tensile force applied to the electrode-tab assembly with respect to the displacement of a jig, and the jig may be configured to fix and move the electrode tab.

The jig may move at a constant speed while the plurality of welded parts are broken.

### [Advantageous Effects]

An electrode-tab assembly inspection device according to embodiments of the present invention may be configured to apply a tensile force to an electrode-tab assembly in a direction that is not parallel to an electrode. Accordingly, an electrode tab can be prevented from being broken before a welded part between the electrode and the electrode tab is broken, and the reliability of the electrode-tab assembly inspection device and a method using the same can be improved.

Effects achievable from embodiments of the present invention are not limited to the above-described effects, and other effects that are not described herein will be clearly derived and understood by those of ordinary skilled in the art to which the embodiments of the present invention pertain from the following description. That is, unintended effects achieved when the embodiments of the present invention are implemented are derivable by those of ordinary skilled in the art from the embodiments of the present invention.

### [Brief Description of the Drawings]

FIG. 1 is a flowchart of an inspection method according to embodiments.
FIG. 2 is a diagram illustrating an electrode-tab assembly inspection device according to embodiments.
FIG. 3 is a perspective view of an electrode-tab assembly.
FIG. 4 is a perspective view of an electrode-tab assembly.
FIG. 5 is a graph showing inspection of an electrode-tab assembly.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First and Second Embodiments)

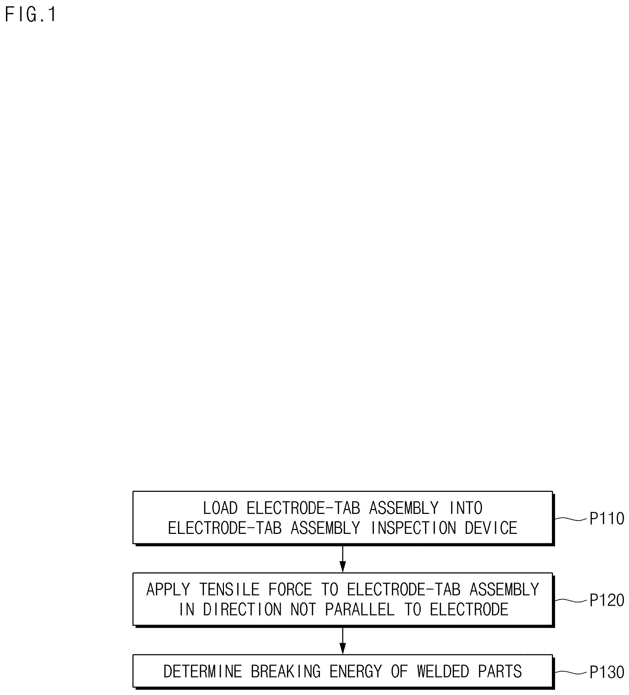

FIG. 1 is a flowchart of an inspection method according to embodiments.

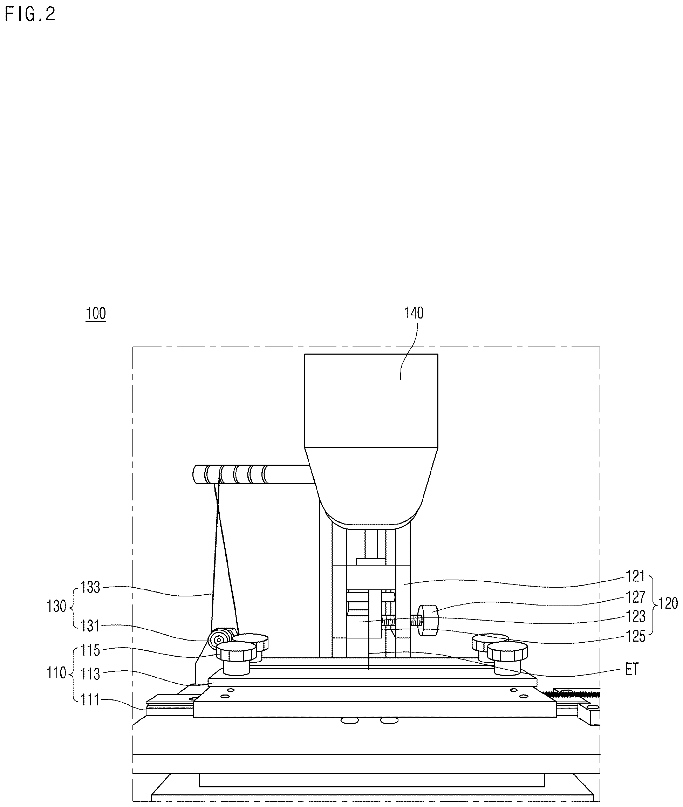

FIG. 2 is a diagram illustrating an electrode-tab assembly inspection device 100 according to embodiments.

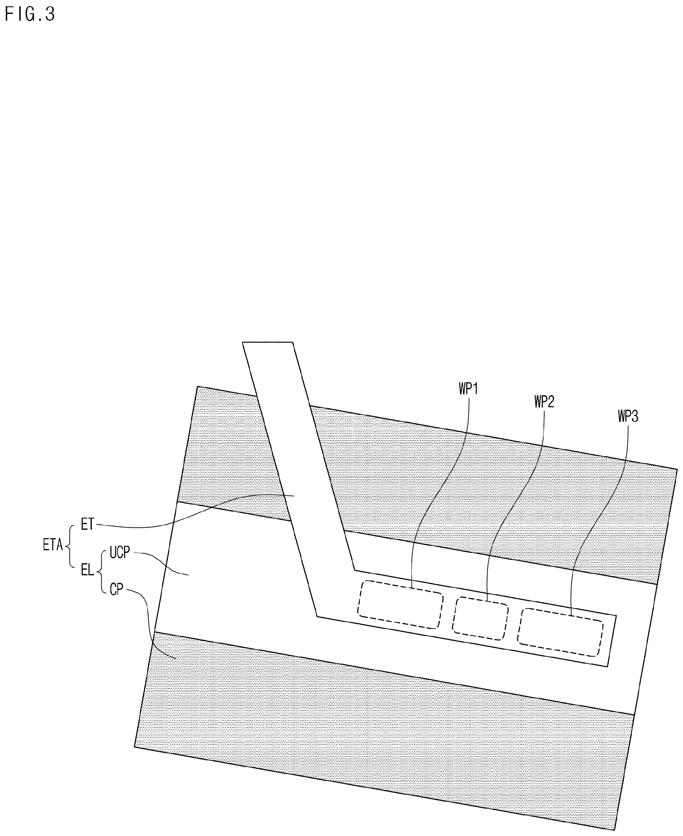

FIG. 3 is a perspective view of an electrode-tab assembly ETA.

Referring to FIGS. 1 to 3, in P110, the electrode-tab assembly ETA may be loaded into the electrode-tab assembly inspection device 100.

The electrode-tab assembly ETA may include an electrode EL and an electrode tab ET coupled to the electrode EL. The electrode EL may be a positive electrode or a negative electrode. The electrode EL may include a current collector and an active material.

A thickness of a positive electrode current collector may range from about 3 µm to about 500 µm. The positive electrode current collector may not cause a chemical change in a finally manufactured secondary battery and may have high conductivity. The positive electrode current collector may include, for example, stainless steel, nickel, titanium, baked carbon, and aluminum. The positive electrode current collector may include stainless steel surface-treated with carbon, nickel, titanium, silver, or the like. A surface of the positive electrode current collector may include a fine uneven structure to increase the adhesion of the active material. The positive electrode current collector may be in the form of film, sheet, foil, net, porosity, foam, nonwoven fabric or the like.

A thickness of a negative electrode current collector may be in a range of about 3 µm to about 500 µm. The negative electrode current collector may not cause a chemical change in a finally manufactured secondary battery and may have high conductivity. The negative electrode current collector may include stainless steel, aluminum, nickel, titanium, baked carbon, and aluminum-cadmium alloy. The negative electrode current collector may include stainless steel surface-treated with carbon, nickel, titanium, silver, or the like. A surface of the negative electrode current collector may include a fine uneven structure to increase the adhesion of the active material. The negative electrode current collector may be in the form of film, sheet, foil, net, porosity, foam, nonwoven fabric or the like.

A positive electrode active material is a material that may cause an electrochemical reaction. The positive electrode active material may be a lithium transition metal oxide. For example, the positive electrode active material may include: a layered compound substituted with one or more transition metal, e.g., lithium cobalt oxide (LiCoO₂) or lithium nickel oxide (LiNiO₂); lithium manganese oxide substituted with one or more transition metal; lithium nickel-based oxide expressed by a chemical formula of LiNi_{1-y}M_{y}O₂ (here, M is Co, Mn, Al, CU, Fe, Mg, B, Cr, Zn or Ga, and 0.01≤y≤0.7); lithium nickel cobalt manganese compound oxide expressed by a chemical formula of Li_{1+z}Ni_{b}Mn_{c}Co_{1-(b+c+d)}M_{d}O₍₂₋ₑ₎A, e.g., Li_{1+z}Ni_{1/3}Co_{1/3}Mn_{1/3}O₂ or Li_{1+zN}i_{0.4}Mn_{0.4}Co_{0.2}O₂ (here, -0.5≤z≤0.5, 0.1≤b≤0.8, 0.1≤c≤0.8, 0≤d≤0.2, 0≤e≤0.2, b+c+d<1, M is Al, Mg, Cr, Ti, Si or Y, and A is F, P or Cl); or olivinebased lithium metal phosphate expressed by a chemical formula of Li₁₊ₓM_{1-y}M'_{y}PO_{4-z}X_{z} (here, M is a transition metal, and more particularly, Fe, Mn, Co or Ni, M' is Al, Mg or Ti, X is F, S or N, -0.5≤x≤+0.5, 0≤y≤0.5, and 0≤z≤0.1).

A negative electrode active material may include, for example, carbon such as nongraphitized carbon or graphite-based carbon. The negative electrode active material may include, for example, a metal composite oxide such as LiₓFe₂O₃ (0≤x≤1), LixWO₂ (0≤x≤1), or SnₓMe₁₋ₓMe'_{y}O_{z} (here, Me is Mn, Fe, Pb, or Ge, Me' is Al, B, P, Si, a Group I element, a Group II element or a Group III element of the periodic table, or halogen, 0<x≤1, 1≤y≤3, and 1≤z≤8). The negative electrode active material may include, for example, lithium metal, lithium alloy, silicon-based alloy, and tin-based alloy. The negative electrode active material may include, for example, a metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅. The negative electrode active material may include, for example, a conductive polymer such as polyacetylene, a Li-Co-Ni-based material, etc.

The electrode EL may include a coated part CP to which the active material is applied, and an uncoated part UCP to which the active material is not applied and thus on which the positive electrode current collector is exposed. The electrode tab ET may be coupled to the uncoated part UCP of the electrode EL. As a non-limiting example, the electrode tab ET may be fixed to the electrode EL by a method such as ultrasonic welding. The electrode tab ET may be fixed to the electrode EL by a method such as resistance welding, laser welding, or arc welding.

The electrode-tab assembly ETA may include a plurality of welded parts WP1, WP2, and WP3. The plurality of welded parts WP1, WP2, and WP3 may be sequentially arranged in a direction in which the electrode tab ET extends. The welded part WP3 may be closest to an end part in contact with the electrode EL among end parts of the electrode tab ET. The welded part WP2 may be interposed between the welded parts WP1 and WP2.

The electrode-tab assembly inspection device 100 may be configured to measure welding strength of the electrode-tab assembly ETA. The electrode-tab assembly inspection device 100 may include a first jig 110, a second jig 120, a connection device 130, and a gauge 140.

The loading of the electrode-tab assembly ETA into the electrode-tab assembly inspection device 100 may include fixing the electrode EL by the first jig 110 and fixing the electrode tab ET by the second jig 120.

The first jig 110 may be configured to fix the electrode EL of the electrode-tab assembly ETA. The first jig 110 may be a rail jig. The first jig 110 may be configured to move the electrode EL of the electrode-tab assembly ETA. The first jig 110 may be configured to move the electrode EL of the electrode-tab assembly ETA in a direction parallel to the electrode EL.

The first jig 110 may include a rail 111, a jig plate 113, and fixing parts 115. The fixing parts 115 may be, for example, setscrews. By tightening the fixing parts 115, the jig plate 113 may press the electrode EL and thus the electrode EL may be fixed to the jig plate 113. The jig plate 113 may include a structure (e.g., a hollow or slit) exposing the electrode tab ET and a part (e.g., a portion of the uncoated part UCP) of the electrode EL coupled to the electrode tab ET. The jig plate 113 may be configured to move along the rail 111. The movement of the jig plate 113 may cause the electrode EL to be moved.

The second jig 120 may include a jig frame 121, a first clamp 123, a second clamp 125, and a regulator 127. The jig frame 121 may support the other elements of the second jig 120, such as the first clamp 123, the second clamp 125, and the regulator 127. The first clamp 123 may be fixed to the jig frame 121. The second clamp 125 may face the first clamp 123. The second clamp 125 may be configured to be moved forward or backward with respect to the first clamp 123 by manipulation of the regulator 127. The electrode tab ET when pulled upward (i.e., toward the second jig 120) through the slit or hollow of the jig plate 113 may be pressed by the second clamp 125 and the first clamp 123 to be fixed to the second jig 120. The first and second clamps 123 and 125 may each include an uneven structure such as a knurled shape to ensure the fixing of the electrode tab ET. As a tensile force is applied to the second jig 120 (i.e., as an external force is applied to the second jig 120 to pull the second jig 120, the tensile force may be applied to the electrode-tab assembly ETA.

The second jig 120 may be connected to the first jig 110. The second jig 120 may be connected to the first jig 110 by the connection device 130. The connection device 130 may include a core 131 and a connection wire 133. A direction in which the connection wire 133 extends may be changed based on the core 131. The connection wire 133 between the core 131 and the second jig 120 may be parallel to a tensile direction of the second jig 120 (i.e., a direction in which the electrode tab ET is pulled). The connection wire 133 between the core 131 and the first jig 110 may be parallel to the electrode EL.

The gauge 140 may be coupled to the second jig 120. The gauge 140 may be, for example, a push-pull gauge. The gauge 140 may be configured to sense the magnitude of a tensile force applied to the electrode tab ET.

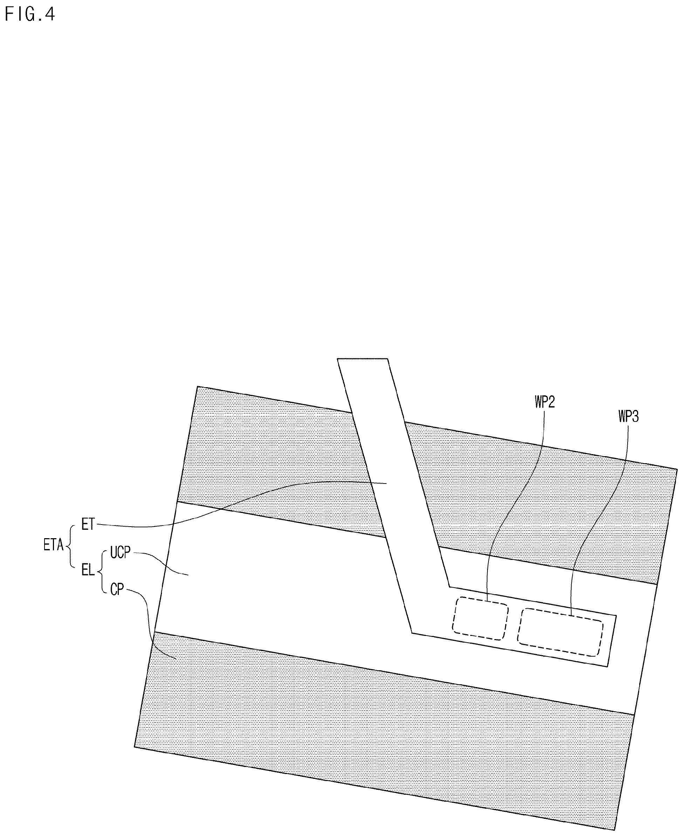

FIG. 4 is a perspective view of the electrode-tab assembly ETA after the welded part WP1 (see FIG. 3) is broken.

Referring to FIGS. 1 to 4, in P120, a tensile force may be applied to the electrode-tab assembly ETA in a direction not parallel to the electrode EL. The direction not parallel to the electrode EL may be understood to include a direction substantially perpendicular to the electrode EL and a direction oblique to the electrode EL. That is, the tensile force applied to the electrode-tab assembly ETA may be perpendicular or oblique to the electrode EL. By moving the second jig 120 in the direction not parallel to the electrode EL to be moved away from the electrode EL, the tensile force in the direction not parallel to the electrode EL may be applied to the electrode-tab assembly ETA.

According to embodiments, as the tensile force is applied to the electrode-tab assembly ETA, the plurality of welded parts WP1, WP2, and WP3 of the electrode ETA assembly may be sequentially broken. That is, the welded part WP2 may be broken after the welded part WP1 is broken, and the welded part WP3 may be broken after the welded part WP2 is broken. According to embodiments, while the plurality of welded parts WP1, WP2, and WP3 are broken, the second jig 120 may move at a constant speed but embodiments are not limited thereto.

Due to the connection device 130, the movement of the second jig 120 may cause the first jig 110 to be moved, and a movement distance of the second jig 120 may be substantially the same as a movement distance of the first jig 110. According to embodiments, due to the movement of the first jig 110, the direction of the tensile force applied to the electrode-tab assembly ETA may be maintained even after the welded part WP1 is broken. Accordingly, while each of the plurality of welded parts WP1, WP2, and WP3 is broken, a tensile force in the same direction may be applied to the electrode-tab assembly ETA. That is, during inspection of the electrode-tab assembly ETA, the direction of the tensile force applied to the electrode-tab assembly ETA may be maintained constant. Because the plurality of welded parts WP1, WP2, and WP3 may be broken under the same condition, welding strengths of the plurality of welded parts WP1, WP2, and WP3 may be accurately compared with one another.

Those of ordinary skill in the art will be able to easily derive an embodiment in which, unlike the connection device of FIG. 2, the displacements of the first and second jigs 110 and 120 are synchronized with each other, as in an embodiment in which the first and second jigs 110 and 120 are driven by high-precision motors (e.g., linear servo motors) such that the displacements of the first and second jigs 110 and 120 are the same.

Furthermore, by applying the tensile force to the electrode-tab assembly ETA in the direction not parallel to the electrode EL, the tensile force may be concentrated on the plurality of welded parts WP1, WP2, and WP3, and an unwelded part of the electrode tab ET (i.e., a part of the electrode tab ET spaced apart from the plurality of welded parts WP1, WP2, and WP3) may be prevented from being broken before the plurality of welded parts WP1, WP2, and WP3 are broken.

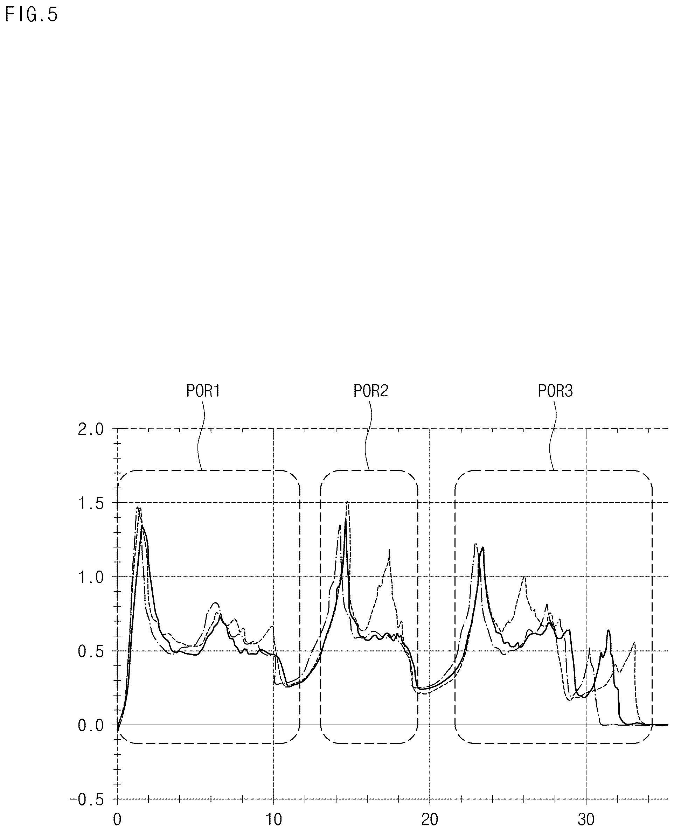

FIG. 5 is a graph showing inspection of the electrode-tab assembly ETA.

Referring to FIGS. 1 to 5, in P130, breaking energy of the plurality of welded parts WP1, WP2, and WP3 may be determined. The gauge 140 may be configured to sense the magnitude of a tensile force applied to the electrode-tab assembly ETA and the displacement of the second jig 120 while the plurality of welded parts WP1, WP2, and WP3 are broken. In FIG. 5, the vertical axis represents a magnitude of a tensile force applied to the electrode-tab assembly ETA, and the vertical axis represents a displacement of the second jig 120. Accordingly, the breaking energy may be determined through integration of the graph of FIG. 5. In FIG. 5, the vertical axis and the horizontal axis are expressed in arbitrary units.

In the graph of FIG. 5, the breaking energy of the welded part WP1 may be calculated through integration of a first part POR1, the breaking energy of the welded part WP2 may be calculated through integration of a second part POR2, and the breaking energy of the welded part WP3 may be calculated through integration of a third part POR3.

The first to third parts POR1, POR2, and POR3 may be classified based on the magnitude of the tensile force applied to the electrode-tab assembly ETA. For example, it may be determined that the plurality of welded parts WP1, WP2, and WP3 are broken when the magnitude of the tensile force falls below a threshold. Accordingly, the first to third parts POR1, POR2, and POR3 may be respectively matched to the plurality of welded parts WP1, WP2, and WP3 based on a change in the magnitude of the tensile force, and breaking energy of each of the plurality of welded parts WP1, WP2, and WP3 may be calculated.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. An electrode-tab assembly inspection device comprising:
a first jig configured to fix an electrode including a coated part and an uncoated part;
a second jig configured to pull an electrode tab in a direction that is not parallel to the electrode, the electrode tab being welded to the uncoated part of the electrode; and
a gauge configured to sense a tensile force applied to the electrode tab.

2. The electrode-tab assembly inspection device of claim 1, wherein the second jig is configured to pull the electrode tab in a direction oblique to the electrode.

3. The electrode-tab assembly inspection device of claim 1, wherein the second jig is configured to pull the electrode tab in a direction perpendicular to the electrode.

4. The electrode-tab assembly inspection device of claim 1, wherein the first jig is configured to move the electrode to cause an angle between the electrode tab and the electrode to be maintained constant.

5. The electrode-tab assembly inspection device of claim 4, wherein the first jig is a rail jig.

6. The electrode-tab assembly inspection device of claim 1, further comprising a connection device configured to connect the first jig and the second jig.

7. The electrode-tab assembly inspection device of claim 1, wherein a displacement of the first jig is the same as a displacement of the second jig.

8. An inspection method comprising:
applying a tensile force to an electrode-tab assembly, which includes an electrode and an electrode tab, in a direction that is not parallel to the electrode, the electrode-tab assembly further including a plurality of welded parts between the electrode and the electrode tab; and
determining breaking energy of the plurality of welded parts between the electrode and the electrode tab of the electrode-tab assembly.

9. The inspection method of claim 8, wherein the tensile force is perpendicular to the electrode.

10. The inspection method of claim 8, wherein the tensile force is oblique to the electrode.

11. The inspection method of claim 8, wherein the direction of the tensile force is constant while the plurality of welded parts are broken.

12. The inspection method of claim 8, wherein, in the applying of the tensile force to the electrode-tab assembly in the direction not parallel to the electrode, the electrode is moved in a direction parallel to the electrode.

13. The inspection method of claim 8, wherein the breaking energy of the plurality of welded parts is calculated based on an integration of the tensile force applied to the electrode-tab assembly with respect to the displacement of a jig,
wherein the jig is configured to fix and move the electrode tab.

14. The inspection method of claim 13, wherein the jig moves at a constant speed while the plurality of welded parts are broken.
